# EUROPEAN PATENT SPECIFICATION

(11) **EP 3 082 015 B1**
(45) Date of publication and mention of the grant of the patent: **07.10.2020**
(21) Application number: 14869589.3
(22) Date of filing: 08.12.2014
(51) Int. Cl.: G10L 21/10, G06F 3/00, G06F 3/14, G06F 3/16

(54) **METHOD AND APPARATUS FOR DISPLAYING IMAGE INFORMATION**
VERFAHREN UND VORRICHTUNG ZUR ANZEIGE VON BILDINFORMATIONEN
PROCÉDÉ ET APPAREIL PERMETTANT D'AFFICHER DES INFORMATIONS D'IMAGES

(30) Priority: 12.12.2013 KR 20130154445
(43) Date of publication of application: 19.10.2016
(73) Proprietor: Samsung Electronics Co., Ltd., Suwon-si, Gyeonggi-do 443-742 (KR)
(72) Inventor: JUN, Dongyo, Gumi-si Gyeongsangbuk-do 730-764 (KR)
(74) Representative: HGF
(86) International application number: PCT/KR2014/012018
(87) International publication number: WO 2015/088213

(56) References cited:
- KR-A- 20060 090 687
- KR-A- 20070 002 149
- KR-A- 20120 035 100
- KR-A- 20130 062 455
- US-A1- 2004 120 554
- US-A1- 2009 262 668
- US-A1- 2011 131 041
- US-A1- 2013 003 948

## Description

### [Technical Field]

The present invention relates to a method and apparatus for displaying an image associated with the other party of a call connection.

### [Background Art]

Normally a call log records user's call data such as time, date, phone number, or the other party's name registered in a phonebook. Additionally, in case a user has registered in advance a photo as part of the other party's information in a phonebook, a call log may also show such a registered photo. In this case, from a call log, a user can easily know the time and other party of each recorded call. However, in case of a non-stored phone number, a user can hardly recall the other party of a past call or its conversation through only a call log showing a call time, phone number, date, or the like.

Most users tend to store a phone number in a phonebook but not to store a photo. Also, for a call just once or twice, usually a user does not store a phone number in a phonebook. In this case, a user may try to connect a call by searching a call log. However, non-stored person can hardly be found from only a call time, date and phone number even if a call log is searched.

US 2009/0262668 A1 relates to an immediate communication system. It discloses a communication service network, comprising: (a) a communication network including a plurality of terminals configured to support at least a first personal communication service for a plurality of users over the communication network, in which service, each user has a unique handle; and (b) a plurality of clients supporting a second personal communication service, wherein each of said clients is configured to attempt a communication under said second service with any of said users using their unique handles.

US 2011/0131041 A1 discloses systems and methods for synthesis of motion for animation of virtual heads/characters via voice processing in portable devices. The systems and methods relate to communication using a virtual humanoid animated during call processing. According to one exemplary implementation, the animation may be performed using a system of recognition of spoken vowels for animation of the lips, which may also be associated with the recognition of dual-tone multifrequencial (DTMF) tones for animation of head movements and facial features. The innovations herein may be generally implemented in portable devices such as PDAs, cell phones and smart phones that have access to mobile telephony.

US 2004/0120554 A1 relates to a system and method for real time lip synchronization. It discloses a method for synchronizing the lips of a sketched face to an input voice. The lip synchronization system and method approach is to use training video as much as possible when the input voice is similar to the training voice sequences. Initially, face sequences are clustered from video segments, then by making use of sub-sequence Hidden Markov Models, a correlation between speech signals and face shape sequences is built. From this re-use of video, the discontinuity between two consecutive output faces is decreased and accurate and realistic synthesized animations are obtained. The lip synchronization system and method can synthesize faces from input audio in real-time without noticeable delay. Since acoustic feature data calculated from audio is directly used to drive the system without considering its phonemic representation, the method can adapt to any kind of voice, language or sound.

### [Disclosure of Invention]

### [Technical Problem]

An aim of certain embodiments of the present invention is to provide an image information display method and apparatus which can create the other party's image by using feature data extracted from analysis of a call voice.

An aim of certain embodiments of the present invention is to provide an image information display method and apparatus which can analyze voice data of the other party unregistered in a phonebook, extract feature data therefrom, and then display an image of the other party on at least one of an incoming or outgoing call screen, a call log screen, and a phonebook screen.

### [Solution to Problem]

According to a first aspect of the present invention an image information display method according to claim 1 is provided.

According to a second aspect of the present invention an electronic device according to claim 9 is provided.

The invention is defined by the independent claims. Further aspects of the invention are outlined in the dependent claims. When the term "embodiment" is used for describing an unclaimed combination of features, it has to be understood as referring to examples useful for understanding the present invention.

### [Advantageous Effects of Invention]

According to certain embodiments, by creating and displaying the other party's image on the basis of analysis information about a call voice, it is possible to help a user to recall the content of a past call and to offer information being useful for easily finding the other party of such a call.

According to certain embodiments, by further displaying an image associated with time, weather, ambient noise, etc. of a past call, it is possible to help a user to easily remember the other party of the call.

### [Brief Description of Drawings]

FIG. 1 is a block diagram illustrating an electronic device in accordance with an embodiment.
FIGS. 2A and 2B are screenshots illustrating examples of displaying an image of the other party in a call connection in accordance with embodiments.
FIGS. 3A and 3B are screenshots illustrating examples of creating the other party's image by analyzing the other party's voice data in accordance with embodiments.
FIGS. 4A to 4C are screenshots illustrating examples of displaying the other party's image in a call connection or phonebook execution in accordance with embodiments.
FIG. 5 is a flow diagram illustrating an image information display method in accordance with an embodiment.
FIG. 6 is a flow diagram illustrating an image information display method in accordance with another embodiment.

### [Mode for the Invention]

Hereinafter, some of various embodiments of the present invention will be described more fully with reference to the accompanying drawings. This invention may, however, be embodied in many different forms and should not be construed as limited to the embodiments set forth herein. Rather, the disclosed embodiments are provided so that this disclosure will be thorough and complete, and will fully convey the scope of the invention to those skilled in the art. The principles and features of this invention may be employed in varied and numerous embodiments without departing from the scope of the invention.

Furthermore, well known or widely used techniques, elements, structures, and processes may not be described or illustrated in detail to avoid obscuring the essence of the present invention. Although the drawings represent exemplary embodiments of the invention, the drawings are not necessarily to scale and certain features may be exaggerated or omitted in order to better illustrate and explain the present invention.

In this description, an image information display apparatus according to various embodiments of the present invention may be implemented as a form included in an electronic device.

According to some embodiments, an electronic device may be any type of device which has a communication function. For example, an electronic device may be a smart phone, a tablet PC (Personal Computer), a mobile phone, a video phone, an e-book reader, a desktop PC, a laptop PC, a netbook computer, a PDA (Personal Digital Assistant), a PMP (Portable Multimedia Player), an MP3 player, a portable medical device, a digital camera, or a wearable device (e.g., an HMD (Head-Mounted Device) such as electronic glasses, electronic clothes, an electronic bracelet, an electronic necklace, an electronic appcessory, or a smart watch).

According to some embodiments, an electronic device may be a smart home appliance that involves a communication function. For example, an electronic device may be a TV, a DVD (Digital Video Disk) player, audio equipment, a refrigerator, an air conditioner, a vacuum cleaner, an oven, a microwave, a washing machine, an air cleaner, a set-top box, a TV box (e.g., Samsung HomeSync™, Apple TV™, Google TV™, etc.), a game console, an electronic dictionary, an electronic key, a camcorder, or an electronic picture frame.

According to some embodiments, an electronic device may be a medical device (e.g., MRA (Magnetic Resonance Angiography), MRI (Magnetic Resonance Imaging), CT (Computed Tomography), ultrasonography, etc.), a navigation device, a GPS (Global Positioning System) receiver, an EDR (Event Data Recorder), an FDR (Flight Data Recorder), a car infotainment device, electronic equipment for ship (e.g., a marine navigation system, a gyrocompass, etc.), avionics, security equipment, or an industrial or home robot.

According to some embodiments, an electronic device may be furniture or part of a building or construction having a communication function, an electronic board, an electronic signature receiving device, a projector, or various measuring instruments (e.g., a water meter, an electric meter, a gas meter, a wave meter, etc.). An electronic device disclosed herein may be one of the above-mentioned devices or any combination thereof. As well understood by those skilled in the art, the above-mentioned electronic devices are exemplary only and not to be considered as a limitation of this invention.

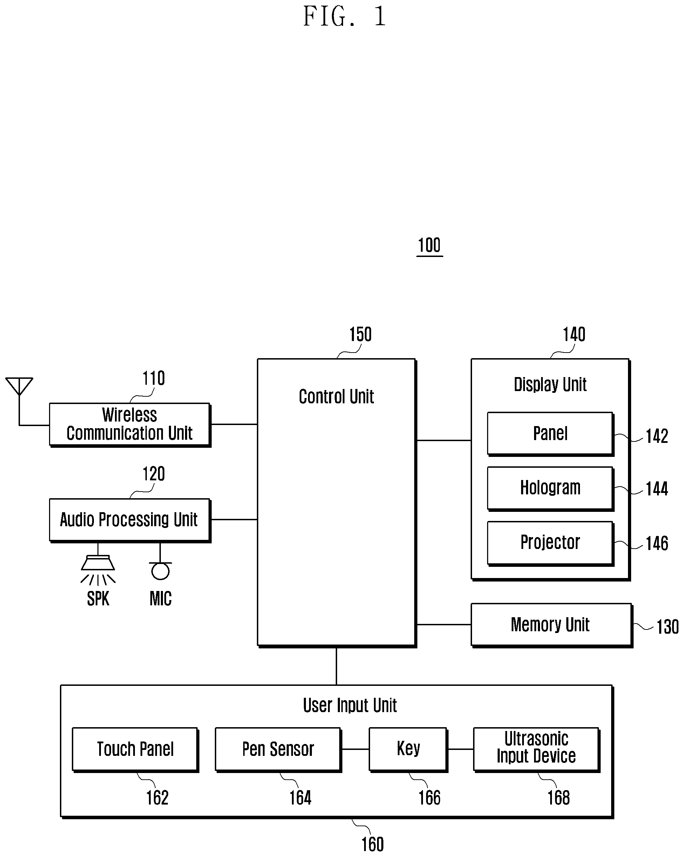

FIG. 1 is a block diagram illustrating an electronic device in accordance with an embodiment.

Referring to FIG. 1, an image display electronic device 100 may include a wireless communication unit 110, an audio processing unit 120, a memory unit 130, a display unit 140, a control unit 150, and a user input unit 160.

The image display electronic device 100 may be configured to include therein more or fewer elements than those shown in FIG. 1. For example, the image display electronic device 100 may be configured to have various sensors (e.g., an infrared sensor, an illuminance sensor, an image sensor, a proximity sensor, an acceleration sensor, an angular velocity sensor, a geomagnetic sensor, etc.), a WLAN (Wireless Local Area Network) module for supporting a wireless internet, a short-range communication module for supporting a variety of short-range communication techniques (e.g., Bluetooth, BLE (Bluetooth Low Energy), NFC (Near Field Communication), etc.), a broadcast receiving module for receiving a broadcasting signal from an external broadcast management server through a broadcasting channel (e.g., a satellite broadcasting channel, a terrestrial broadcasting channel, etc.), and the like.

The wireless communication unit 110 may perform a communication of the image display electronic device 100. Namely, the wireless communication unit 110 may establish a communication channel with a supportable mobile communication network and thereby perform a voice communication, a video communication, a data communication, and the like. The wireless communication unit 110 may include therein a radio frequency (RF) transmitter to up-convert the frequency of an outgoing signal and to amplify the up-converted signal, an RF receiver to low-noise-amplify an incoming signal and to down-convert the frequency of the amplified signal, and the like. Also, the wireless communication unit 110 may include therein a mobile communication module (e.g., a 3rd generation mobile communication module, a 3.5th generation mobile communication module, a 4th generation mobile communication module, etc.).

The audio processing unit 120 may perform a function to transmit an audio signal, received from the control unit 150, to a speaker (SPK) and a function to transmit an audio signal, such as a voice received from a microphone (MIC), to the control unit 150. The audio processing unit 120 may convert voice/audio data into an audible sound and output it through the speaker under the control of the control unit 150. Also, the audio processing unit 120 may convert an audio signal such as a voice, received from the microphone, into a digital signal and deliver it to the control unit 150.

The speaker may output audio data received from the wireless communication unit 110 or stored in the memory unit 130 in a messenger mode, a call mode, a message mode, a recording mode, a voice recognition mode, a broadcast receiving mode, a media content (e.g., a music file, a video file) playback mode, or the like. The speaker may output a sound signal associated with a function (e.g., a messenger activation, a chat reception, a chat transmission, a content image display, a content image related function execution, an incoming call reception, an outgoing call transmission, a camera click, a media content file play, etc.) performed in the device.

The microphone may receive an outside sound signal and process it as electric voice data in a call mode, a message mode, a recording mode, a voice recognition mode, or the like. The processed voice data may be converted into a suitable form for being transmittable to a mobile communication base station through the wireless communication unit 110 and then outputted. Various noise removal algorithms may be employed for the microphone so as to remove noise that occurs while an outside sound signal is received.

The memory unit 130 may store therein a program and data required for the operation of the image display electronic device 100, and may be divided into a program region and a data region. The program region may store therein a program for controlling the overall operation of the image display electronic device 100, an operating system (OS) for booting the electronic device 100, various applications, and the like. The data region, which is designed to store data created by use of the image display electronic device 100, may store therein image, video, audio, etc.

In various embodiments of this invention, the memory unit 130 may store therein phonebook information. Such phonebook information may include at least one of a name, a phone number, a photo, and an email address.

The memory unit 130 may store in advance a referential characteristic value in order to extract feature data associated with at least one of sex, age, a voice volume, the number of times a voice occurs, the number of call participants, and ambient noise. Additionally, the memory unit 130 may store therein image basic information to be used for an image creation. Such image basic information may include at least one of a plurality of hair styles, a plurality of eye types, a plurality of nose types, and a plurality of mouth types.

Further, the memory unit 130 may store therein additional information associated with a call connection. This additional information may include information, or related image, about at least one of location, time and weather associated with a time point when a call is connected. For example, a time-related image may be represented by a bright color when a call-connected time point is day or by a dark color when a call-connected time point is night. For example, weather-related image may include respective images associated with cloud, rain, snow, sun, and the like.

The user input unit 160 may include a touch panel 162, a (digital) pen sensor 164, a key 166, or an ultrasonic input device 168. The touch panel 162 may recognize a touch input in at least one of, for example, a capacitive scheme, a resistive scheme, an infrared scheme, or an ultrasonic scheme, and the like. Also, the touch panel 162 may further include a control circuitry. The capacitive type touch panel 162 is capable of recognizing proximity as well as a direct touch. The touch panel 162 may further include a tactile layer. In this case, the touch panel 162 may offer a tactile response to a user.

The touch panel 162 may sense a user's touch event (e.g., a long press, a tap, a drag, a sweep, a flick, a multi-touch, a hovering, etc.) which comes in contact with or is approaching the surface of the image display electronic device 100 (e.g., the display unit 140). When such a user's touch event is sensed from the surface of the image display electronic device 100 (e.g., the display unit 140), the touch panel 162 may detect the coordinates of the touch event and transfer the detected coordinates to the control unit 150.

The pen sensor 164 may be implemented, for example, by using a method identical or similar to that of receiving a user's touch input, or by using a separate sheet for recognition. The key 166 may include, for example, a mechanical button, an optical key, or a keypad. The ultrasonic input device 168 enables, through an input tool generating an ultrasonic signal, the image display electronic device 100 to sense a sound wave by using the microphone and thereby to identify data. Thus, wireless recognition is possible. According to an embodiment, the image display electronic device 100 may receive a user input from an external device (e.g., a computer or a server) connected to the wireless communication unit 110.

The display unit 140 may include a panel 142, a hologram 144, or a projector 146. The panel 142 may be, for example, an LCD (Liquid Crystal Display), an AM-OLED (Active Matrix Organic Light Emitting Diode), or the like. The panel 142 may be implemented so as to be, for example, flexible, transparent, or wearable. The panel 142 may be formed of a single module together with a touch panel 162.

According to some embodiments, the display unit 140 may be combined, in an integrated form, with at least part (e.g., a touch sensor 161) of the user input unit 160.

The display unit 140 may display thereon a screen of the image display electronic device 100. For example, the display unit 140 may visually offer a menu, input data, and other various types of information to a user. The display unit 140 may display thereon a screen (e.g., a call log screen, a phonebook screen, a call connection screen, etc.) associated with the operation of the image display electronic device 100. If a user's touch event is entered while a specific screen is displayed, the display unit 140 may transmit an input signal caused by the touch event to the control unit 150. Then the control unit 150 may identify the touch event and perform a particular operation corresponding to the touch event.

The control unit 150 may control the overall operation of the image display electronic device 100 and a signal flow between internal elements (i.e., the wireless communication unit 110, the audio processing unit 120, the memory unit 130, the display unit 140, and the user input unit 160) of the electronic device 100. Also, the control unit 150 may perform a function to process data and control a power supply to such elements.

The control unit 150 may detect a call connection (e.g., an outgoing call connection or an incoming call connection). For example, the call connection may be an outgoing call connection caused by a user's request for a call or an incoming call connection caused by the other party's request for a call. When such a call connection is detected, the control unit 150 may search the memory unit 130 for an image of the other party who requests the call connection. If there is the other party's image stored in the memory unit 130, the control unit 150 may display the stored image of the other party on a call connection screen.

However, if there is no stored image of the other party, the control unit 150 may extract feature data by analyzing voice data of the call-connected other party.

Namely, the control unit 150 may receive voice data of the call-connected other party and then analyze the received voice data by using the time domain and/or the frequency domain. For example, the control unit 150 may extract feature data in the frequency domain by analyzing amplitude, frequency, phase, etc. associated with the other party's voice data. Additionally, the control unit 150 may determine sex, age, a voice volume, the number of times a voice occurs, ambient noise, the number of call participants, etc. of the other party by comparing the extracted feature data with a referential characteristic value stored in the memory unit 130.

The control unit 150 may extract feature data from the other party's voice data by using at least one of feature extraction techniques such as LPC (Linear Prediction Coefficient), LPCC (Linear Prediction Cepstral Coefficient), MFCC (Mel-Frequency Cepstral Coefficient), PLPC (Perceptual Linear Prediction Coefficient), and RASTA (RelAtive SpecTrAl).

For example, the control unit 150 may extract, as feature data, at least one of sex, age, a voice volume, the number of times a voice occurs, the number of call participants, and ambient noise of the call-connected other party by using at least one of voice frequency, voice pitch, voice energy, and voice duration. For example, since man and woman are different in voice frequency or voice pitch from each other, the control unit 150 may determine sex by using voice frequency or voice pitch. Also, by using voice energy or voice duration, the control unit 150 may detect the number of times a voice occurs, which shows whether the other party is a talkative person. And also, by using voice energy, the control unit 150 may detect a voice volume, which shows whether the other party has a loud voice.

Based on the extracted feature data, the control unit 150 may create the other party's image. In an embodiment, the control unit 150 may create a human image by using image basic information stored in the memory unit 130 and also create a background image by using additional information. Then, by combining the human image and the background image, the control unit 150 may create the other party's image.

In case at least one of an outgoing call connection, an incoming call connection, a call log execution, and a phonebook execution occurs, the control unit 150 may display the other party's image,
The memory unit 130 may store therein the extracted feature data or the created other party's image.

In case at least one of an outgoing call connection, an incoming call connection, a call log execution, and a phonebook execution occurs, the control unit 150 may search the memory unit 130 to find the stored other party's image. For example, when at least one of an outgoing call connection, an incoming call connection, a call log execution, and a phonebook execution occurs, the control unit 150 may display the other party's image stored in the memory unit 130 through the display unit 140. Additionally, the control unit 150 may create the other party's image by combining the extracted feature data and the feature data stored in the memory 130, and then display the created other party's image through the display unit 140.

The image display electronic device 100 according to this embodiment may include therein or omit therefrom at least one or more of the above-discussed elements, or further include any other additional element.

The electronic device 100 includes the control unit 150 configured to extract feature data of the other party by analyzing voice data received through a call connection and, based on the extracted feature data, to create an image associated with the other party, the memory unit 130 configured to store the created image in connection with information associated the other party, and the display unit 140 configured to display the stored image when an event associated with the other party occurs.

According to some embodiments, the call connection may include an outgoing call connection caused by a user's request for a call or an incoming call connection caused by the other party's request for a call.

According to some embodiments, the event may include at least one of an outgoing call connection, an incoming call connection, a call log display, and a phonebook display.

According to some embodiments, the control unit 150 may be further configured to analyze the voice data by using at least one of a time domain of the voice data and a frequency domain of the voice data.

According to some embodiments, the control unit 150 may be further configured to extract the feature data from the voice data by using at least one of feature extraction techniques including LPC (Linear Prediction Coefficient), LPCC (Linear Prediction Cepstral Coefficient), MFCC (Mel-Frequency Cepstral Coefficient), PLPC (Perceptual Linear Prediction Coefficient), and RASTA (RelAtive SpecTrAl).

According to some embodiments, the control unit 150 may be further configured to extract, as the feature data, at least one of sex, age, a voice volume, the number of times a voice occurs, and ambient noise of the other party, and the number of call participants, from the voice data.

According to some embodiments, the control unit 150 may be further configured to create a human image by using at least one of hair styles, eye types, nose types, mouth types, and wrinkle types, based on the feature data.

According to some embodiments, the memory unit 130 may be further configured to store the voice data in connection with information associated the other party.

According to some embodiments, the control unit 150 may be further configured to add, as at least part of the image, an image corresponding to at least one of location information, time information, and weather information associated with the call connection.

According to some embodiments, the control unit 150 may be further configured to create a human image of the other party by using the feature data, to create a background image by using at least one of location information, time information, and weather information associated with the call connection, and to create the image by combining the human image and the background image.

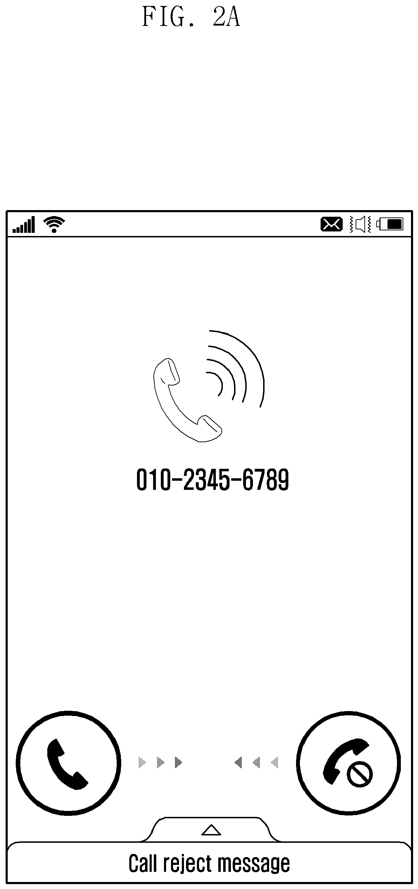

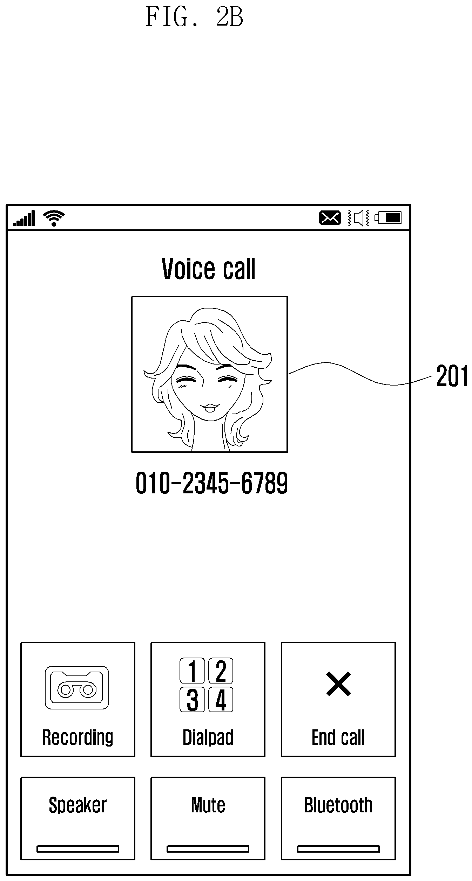

FIGS. 2A and 2B are screenshots illustrating examples of displaying an image of the other party in a call connection in accordance with embodiments.

Referring to FIG. 2A, the image display electronic device (e.g., 100 in FIG. 1) may receive a request for an incoming call connection from the other party through a communication channel. Typically, if an image of the other party who requests an incoming call connection is stored in the memory unit (e.g., 130 in FIG. 1), it can be displayed on the screen. However, if there is no image stored in the memory unit 130, it is not possible to display the other party's image. Therefore, a user of the image display electronic device 100 cannot easily know the other party who requests an incoming call connection.

In this invention, the image display electronic device 100 may receive voice data of the other party requesting an incoming call, and then extract feature data by analyzing the received voice data of the other party. Based on the extracted feature data, the image display electronic device 100 may create the other party's image and display the created other party's image 201 on the screen as shown in FIG. 2B.

In an embodiment, the control unit (e.g., 150 in FIG. 1) of the image display electronic device 100 may extract feature data by analyzing voice data using at least one of the time domain and/or the frequency domain of the received other party's voice data. Also, the control unit 150 may extract, as the feature data, at least one of sex, age, a voice volume, the number of times a voice occurs, the number of call participants, and ambient noise associated with the other party's voice data by using at least one of feature extraction techniques such as LPC, LPCC, MFCC, PLPC, and RASTA.

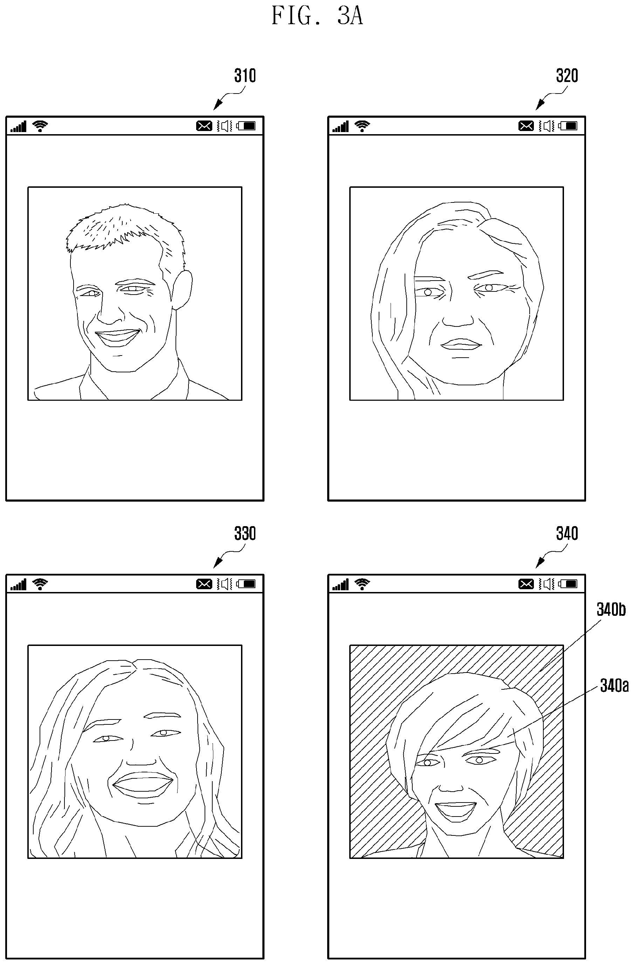

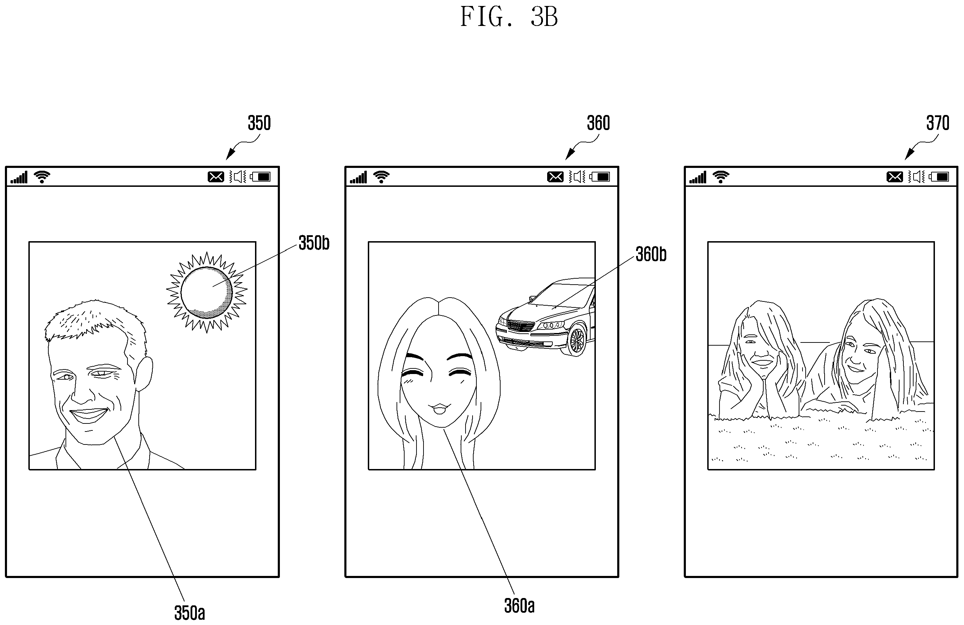

FIGS. 3A and 3B are screenshots illustrating examples of creating the other party's image by analyzing the other party's voice data in accordance with embodiments.

The memory unit (e.g., 130 in FIG. 1) may store in advance a referential characteristic value in order to extract feature data associated with at least one of sex, age, a voice volume, the number of times a voice occurs, the number of call participants, and ambient noise of the other party. Additionally, the memory unit 130 may store therein image basic information that includes at least one of a plurality of hair styles, a plurality of eye types, a plurality of nose types, and a plurality of mouth types.

The control unit (e.g., 150 in FIG. 1) may extract, as the feature data, at least one of sex, age, a voice volume, the number of times a voice occurs, the number of call participants, and ambient noise of the call-connected other party by using at least one of voice frequency, voice pitch, voice energy, and voice duration associated with the other party's voice data.

Referring to FIG. 3A, since man and woman are different in voice frequency or voice pitch from each other, the control unit (e.g., 150 in FIG. 1) may determine sex by using voice frequency or voice pitch associated with the other party's voice data. In case of "man" as a result of determination, the control unit 150 may create the other party's image 310 by using a short hair style, eye type, and mouth type suitable for a man image in the image basic information.

Alternatively, in case of "woman" as a result of determination, the control unit 150 may create the other party's image by using a long hair style, eye type, and mouth type suitable for a woman image in the image basic information. At this time, if it is determined that the sex is a woman and the age is of fifties, the control unit 150 may create the other party's image 320 by adding a long hair style, gray hair, and eye wrinkles to a woman image in the image basic information.

In another embodiment, by using voice energy or voice duration, the control unit 150 may detect the number of times a voice occurs, which shows whether the other party is a talkative person. If the detected number of times a voice occurs is high, the control unit 150 may determine that the other party is a talkative person, and thus create the other party's image 330 using a big mouth in the image basic information.

These images 310 to 330 of the other party may correspond to "human images", for example.

In still another embodiment, the control unit 150 may create a background image by using, as additional information, at least one image of location, time and weather associated with the call-connected time point. For example, the control unit 150 may create the background image using a bright color or sun if the call-connected time point is day, or the background image using a dark color or moon if the call-connected time point is night. Additionally, the control unit 150 may create the background image using weather images associated with cloud, rain, snow, sun, and the like. Therefore, the control unit 150 may create the other party's image 340 by combining the human image (woman) 340a with the background image (night) 340b.

Referring to FIG. 3B, the control unit (e.g., 150 in FIG. 1) may create the other party's image 350 by combining the human image (man) 350a with the background image (sun) 350b. Also, the control unit 150 may create the background image associated with ambient noise extracted as feature data. For example, if ambient noise is high, the control unit 150 may create, as the background image, a 'car' image 360b to show that the other party is call-connected at the outside, and then combine it with the human image (woman) 360a to create the other party's image 360. And also, if the number of call participants extracted as feature data is two or more, the control unit 150 may create the other party's image 370 using an image of two or more persons.

Additionally, by checking the number of times of calls with the other party, the control unit 150 may determine that intimacy is high when the checked number of times of calls is high, or that intimacy is low when the checked number of times of calls is low. In case of high intimacy, the control unit 150 may create the other party's image to add a smiling face to the human image.

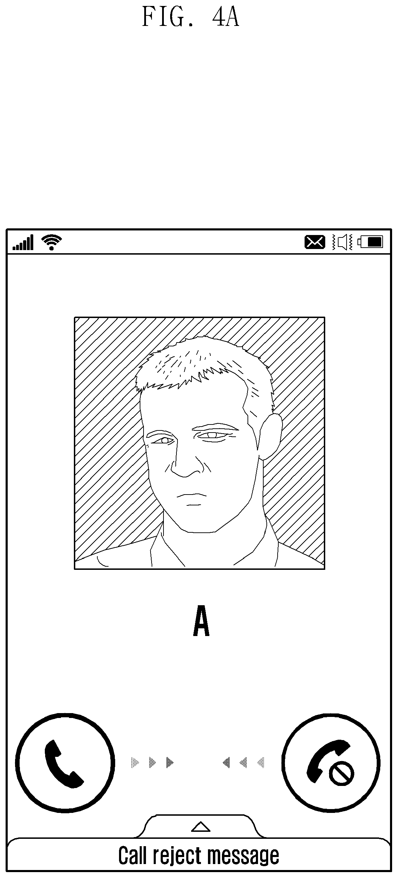

FIGS. 4A to 4C are screenshots illustrating examples of displaying the other party's image in a call connection or phonebook execution in accordance with embodiments.

Referring to FIG. 4A, when an incoming call is requested by the other party, the control unit (e.g., 150 in FIG. 1) may display, on the screen through the display unit (e.g., 140 in FIG. 1), the other party's image stored in the memory unit (e.g., 130 in FIG. 1) in association with the other party requesting the incoming call. At this time, the other party's image may be displayed as the human image of 'man' and the background image of 'night'.

In this case, the control unit 150 may receive voice data of the other party who requests the incoming call, and then extract feature data by analyzing the received voice data of the other party. The control unit 150 may extract feature data at the time point when a call connection is tried, while a call connection is maintained, and/or after a call connection is terminated.

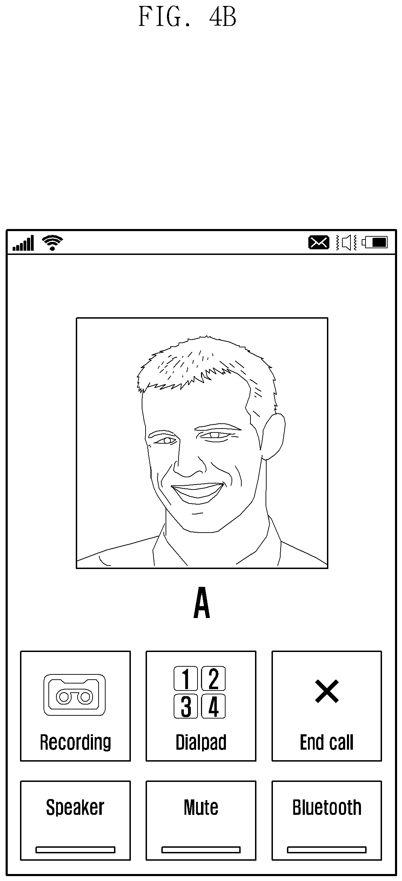

As shown in FIG. 4B, the control unit (e.g., 150 in FIG. 1) may create a new image of the other party by using the extracted feature data in a call connection. For example, the control unit 150 may detect the number of times a voice occurs by using voice energy or voice duration. If the detected number of times a voice occurs is high, the control unit 150 may determine that the other party is a talkative person. Then the control unit 150 may display a newly created image of the other party by changing the other party's image as shown in FIG. 4A to have a big mouth as shown in FIG. 4B. At this time, the control unit 150 may create a new image of the other party by making the weight of recently extracted feature data higher than the weight of feature data stored in the memory unit (e.g., 130 in FIG. 1). Namely, since feature data stored in the memory unit 130 is extracted earlier than recently extracted feature data, the weight of the latter may become higher.

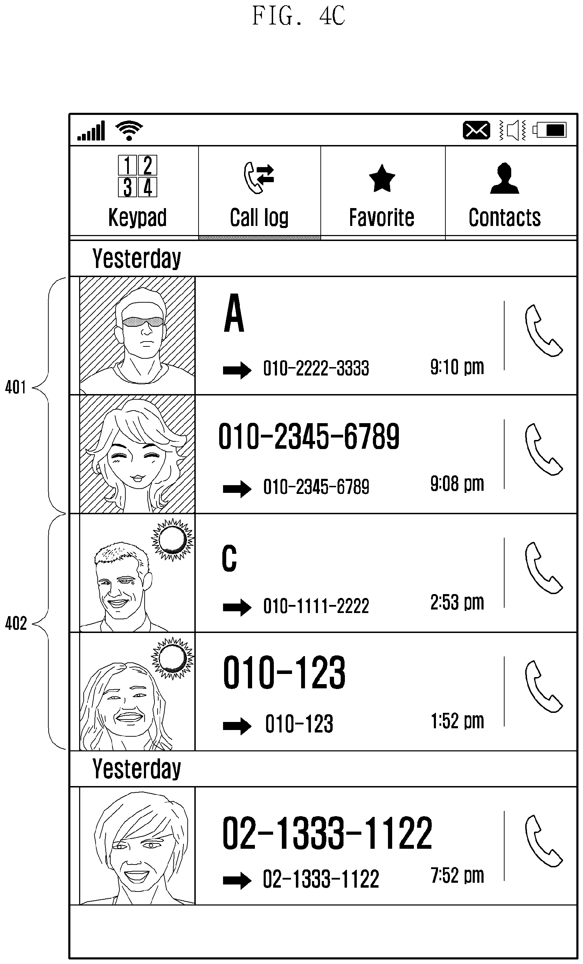

As shown in FIG. 4C, when a call log or a phonebook is executed, the control unit 150 may create the respective other parties' images using the extracted feature data and then display each created image to a corresponding phone number. At this time, the control unit 150 may create a new image of the other party by combining the extracted feature data with feature data stored in the memory unit 130. Further, the control unit 150 may create such a new image by making the weight of recently extracted feature data higher than that of feature data stored in the memory unit 130.

The control unit 150 may execute a call log or a phonebook when a call connection is terminated or at a user's request. When displaying a call log screen, the control unit 150 may determine whether there is the other party's image registered in a phonebook or whether there is new feature data after a call termination. If there is the other party's image registered in a phonebook, the control unit 150 may display the registered image on a call log screen. Also, if there is new feature data after a call termination, the control unit 150 may create the other party's image using the new feature data and feature registered in a phonebook and then display the created image on a call log screen or the like.

For example, the control unit 150 may create 'a human image' from feature data registered in a phonebook and combine it with a background image (e.g., night, represented by slash lines) obtained from new feature data, thus creating the other party's image (401, i.e., the human image plus the background image). Also, the control unit 150 may create 'a human image' from feature data registered in a phonebook and combine it with a background image (e.g., day, represented by sun) obtained from new feature data, thus creating the other party's image (402, i.e., the human image plus the background image). Further, the control unit 150 may create a new image by making the weight of recently extracted feature data higher than that of feature data stored in the memory unit 130. Namely, since feature data stored in the memory unit 130 is extracted earlier than recently extracted feature data, the weight of the latter may become higher.

Additionally, if a call is made with the other party who is not registered in a phonebook, the control unit 150 may extract feature data by analyzing received voice data of the other party. Then the control unit 150 may create the other party's image by using the extracted feature data, store and display the created other party's image on a call log screen or the like.

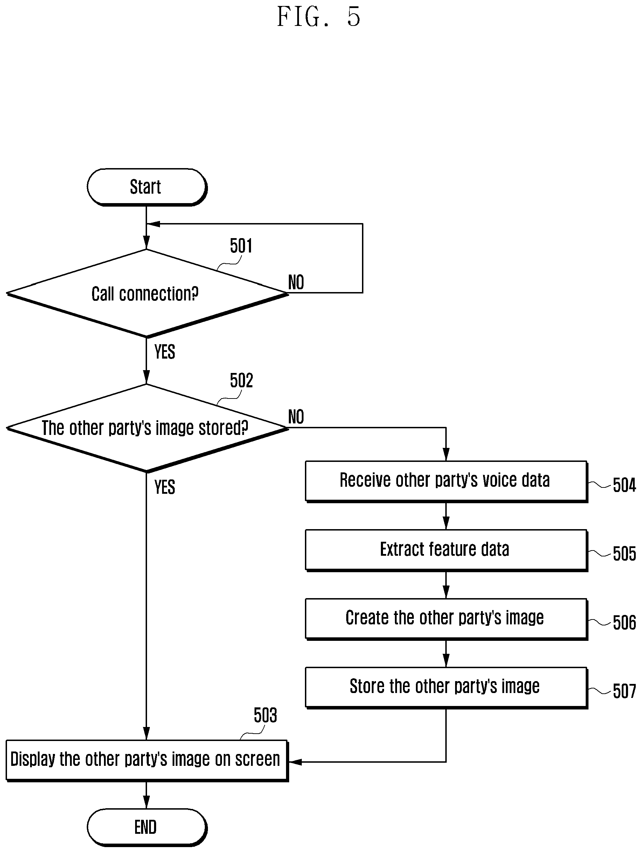

FIG. 5 is a flow diagram illustrating an image information display method in accordance with an embodiment. The image information display method according to this embodiment may be implemented by the image display electronic device 100 in FIG. 1.

Referring to FIG. 5, at operation 501, the control unit (e.g., 150 in FIG. 1) of the image display electronic device (e.g., 100 in FIG. 1) may sense whether a call connection occurs. This call connection may include an outgoing call connection by a user of the image display electronic device 100 and an incoming call connection requested by the other party.

At operation 502, the control unit 150 may determine whether the other party's image associated with the call connection is stored in the memory unit 130. The memory unit 130 may store in a phonebook at least one of name, email address, and image for each phone number of the other party.

If the other party's image is stored in the memory unit 130, at operation 503, the display unit 140 displays on the screen the other party's image stored in the memory unit 130.

If the other party's image is not stored in the memory unit 130, at operation 504, the control unit 150 receives voice data of the call-connected other party.

At operation 505, the control unit 150 extracts feature data by analyzing the other party's voice data. In an embodiment, the control unit 150 may extract feature data by analyzing voice data using at least one of the time domain and/or the frequency domain of the received other party's voice data. Also, the control unit 150 may extract, as the feature data, at least one of sex, age, a voice volume, the number of times a voice occurs, the number of call participants, and ambient noise associated with the other party's voice data by using at least one of feature extraction techniques such as LPC, LPCC, MFCC, PLPC, and RASTA.

The memory unit 130 may store in advance a referential characteristic value in order to extract feature data associated with at least one of sex, age, a voice volume, the number of times a voice occurs, the number of call participants, and ambient noise of the other party. Additionally, the memory unit 130 may store therein image basic information that includes at least one of a plurality of hair styles, a plurality of eye types, a plurality of nose types, and a plurality of mouth types.

The control unit 150 may extract, as the feature data, at least one of sex, age, a voice volume, the number of times a voice occurs, the number of call participants, and ambient noise of the call-connected other party by using at least one of voice frequency, voice pitch, voice energy, and voice duration associated with the other party's voice data.

At operation 506, the control unit 150 may create the other party's image using the extracted feature data. When the creation of the other party's image is completed, at operation 507 the control unit 150 may store the created other party's image in the memory unit 130. Also, the control unit 150 may return to the operation 503 and display the other party's image on a screen offered by the display unit 140.

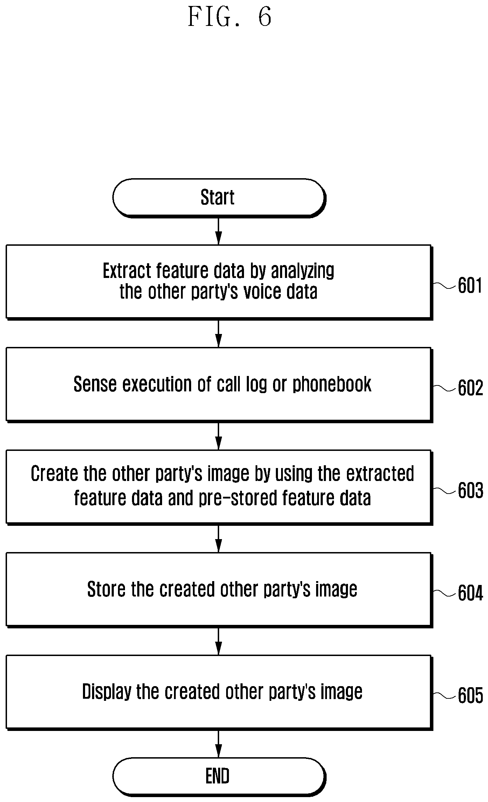

FIG. 6 is a flow diagram illustrating an image information display method in accordance with another embodiment.

Referring to FIG. 6, at operation 601, the control unit (e.g., 150 in FIG. 1) of the image display electronic device (e.g., 100 in FIG. 1) may extract feature data by analyzing the other party's voice data. For example, the control unit 150 may extract the feature data by analyzing the other party's voice data during a call connection or after a call connection is terminated.

At operation 602, the control unit 150 may sense the execution of a call log or a phonebook. For example, the control unit 150 may execute a call log or a phonebook when a call connection is terminated or at a user's request.

At operation 603, the control unit 150 may create the other party's image by using the feature data extracted at the operation 602 and feature data stored in the memory unit 130. Namely, by combining the extracted feature data with the feature data previously stored in the memory unit 130, the control unit 150 may create a new image of the other party.

At operation 604, the control unit 150 may store the created other party's image in the memory unit 130.

At operation 605, the control unit 150 may display the created other party's image through a screen offered by the display unit 140.

The operations performed in the above-discussed drawings (e.g., FIGS. 2A and 2B, FIGS. 3A and 3B, FIGS. 4A to 4C, FIG. 5, and FIG. 6) may be executed sequentially, in parallel, repeatedly, or by a heuristic method. Additionally, some operations may be executed in different orders or omitted, or any other operation may be added.

The image information display method of the present invention includes receiving voice data of the other party of a call connection through the call connection, extracting feature data of the other party by analyzing the received voice data, creating an image associated with the other party, based on the extracted feature data, storing the created image in connection with information associated the other party, and displaying the stored image when an event associated with the other party occurs.

According to some embodiments, the call connection may include an outgoing call connection caused by a user's request for a call or an incoming call connection caused by the other party's request for a call.

According to some embodiments, the event may include at least one of an outgoing call connection, an incoming call connection, a call log display, and a phonebook display.

According to some embodiments, the extracting the feature data may include analyzing the voice data by using at least one of a time domain of the voice data and a frequency domain of the voice data.

According to some embodiments, the extracting the feature data may include extracting the feature data from the voice data by using at least one of feature extraction techniques including LPC (Linear Prediction Coefficient), LPCC (Linear Prediction Cepstral Coefficient), MFCC (Mel-Frequency Cepstral Coefficient), PLPC (Perceptual Linear Prediction Coefficient), and RASTA (RelAtive SpecTrAl).

According to some embodiments, the extracting the feature data may include extracting, as the feature data, at least one of sex, age, a voice volume, the number of times a voice occurs, and ambient noise of the other party, and the number of call participants, from the voice data.

According to some embodiments, the creating the image may include creating a human image by using at least one of hair styles, eye types, nose types, mouth types, and wrinkle types, based on the feature data.

According to some embodiments, the image information display method may further includes storing the voice data in connection with information associated the other party.

According to some embodiments, the creating the image may include adding, as at least part of the image, an image corresponding to at least one of location information, time information, and weather information associated with the call connection.

According to the invention the creating the image includes creating a human image of the other party by using the feature data, creating a background image by using at least one of location information, time information, and weather information associated with the call connection, and creating the image by combining the human image and the background image.

While this invention has been particularly shown and described with reference to an exemplary embodiment thereof, it will be understood by those skilled in the art that various changes in form and details may be made therein without departing from the scope of this invention as defined by the appended claims.

## Claims

1. An image information display method comprising:
receiving (504) voice data of an other party of a voice call through a call connection;
determining if an image of the other party is stored in a memory (130) of an electronic device (100);
if the image is determined to be stored in the memory (130), displaying the stored image on a display (140) of the electronic device (100), extracting a feature data from the received voice data after the call connection is terminated, creating a new image of the other party based on the extracted feature data and a feature data of the stored image, and storing the created new image in connection with information associated with the other party; and
if the image is not determined to be stored in the memory (130), extracting (505) the feature data from the received voice data after the call connection is terminated, creating (506) the image of the other party, based on the extracted feature data, and displaying (503) the created image (201) of the other party on the display (140);
wherein creating the image of the other party comprises creating a human image based on image information stored in the memory (130), creating a background image based on additional information, and combining the human image and the background image; and
wherein the additional information comprises at least one of location information, time information, and weather information associated with the call connection.

2. The method of claim 1, wherein the call connection includes an outgoing call connection caused by a user's request for a call or an incoming call connection caused by the other party's request for a call.

3. The method of claim 1, further comprising:
displaying, in response to an event associated with the other party occurring, the created image of the other party on the display,
wherein the event includes at least one of an outgoing call connection, an incoming call connection, a call log display, and a phonebook display.

4. The method of claim 1, wherein the extracting (505) the feature data includes analyzing the voice data by using at least one of a time domain of the voice data and a frequency domain of the voice data.

5. The method of claim 1, wherein the extracting (505) the feature data includes extracting the feature data from the voice data by using at least one of feature extraction techniques including LPC, Linear Prediction Coefficient; LPCC, Linear Prediction Cepstral Coefficient; MFCC, Mel-Frequency Cepstral Coefficient; PLPC, Perceptual Linear Prediction Coefficient;, and RASTA, RelAtive SpecTrAl.

6. The method of claim 1, wherein the extracting (505) the feature data includes extracting, as the feature data, at least one of sex, age, a voice volume, the number of times a voice occurs, and ambient noise of the other party, and the number of call participants, from the voice data.

7. The method of claim 1, wherein the creating (506) the image includes creating a human image (340a) by using at least one of hair styles, eye types, nose types, mouth types, and wrinkle types, based on the feature data.

8. The method of claim 1, further comprising:
storing the feature data in connection with information associated with the other party.

9. An electronic device (100) comprising:
a display unit (140);
a memory unit (130); and
a control unit (150) configured to:
receive (504) voice data of an other party of a voice call through a call connection;
determine if an image of the other party is stored in the memory unit (130),
if the image is determined to be stored in the memory unit, (130) display the stored image on the display unit (140), extract a feature data from the received voice data after the call connection is terminated, create a new image of the other party based on the extracted feature data and a feature data of the stored image, and store the created new image in connection with information associated with the other party in the memory unit (130), and
if the image is not determined to be stored in the memory unit (130), extract (505) the feature data from the voice data after the call connection is terminated, create (506) the image of the other party, and display the created image (201) of the other party on the display unit (140);
wherein the control unit (150) is further configured to create the image of the other party by creating a human image based on image information stored in the memory (130), creating a background image based on additional information, and combining the human image and the background image; and
wherein the additional information comprises at least one of location information, time information, and weather information associated with the call connection.

10. The electronic device (100) of claim 9, wherein the control unit (150) is further configured to analyze the voice data by using at least one of a time domain of the voice data and a frequency domain of the voice data.

11. The electronic device (100) of claim 9, wherein the control unit (150) is further configured to extract, as the feature data, at least one of sex, age, a voice volume, the number of times a voice occurs, and ambient noise of the other party, and the number of call participants, from the voice data, and to create, a human image (340a) by using at least one of hair styles, eye types, nose types, mouth types, and wrinkle types, based on the feature data.

12. The electronic device (100) of claim 9, wherein the memory unit (130) is further configured to store the feature data in connection with information associated the other party.

## Patentansprüche

1. Bildinformationsanzeigeverfahren, umfassend:
Empfangen (504) von Sprachdaten von einer anderen Partei eines Sprachanrufs durch eine Anrufverbindung;
Bestimmen, ob ein Bild der anderen Partei in einem Speicher (130) einer elektronischen Vorrichtung (100) gespeichert ist;
wenn von dem Bild bestimmt wird, dass es in dem Speicher (130) gespeichert ist, Anzeigen des gespeicherten Bilds auf einer Anzeige (140) der elektronischen Vorrichtung (100), Extrahieren eines Merkmalsdatensatzes aus den empfangenen Sprachdaten, nachdem die Anrufverbindung beendet wurde, Erzeugen eines neuen Bilds der anderen Partei auf der Basis des extrahierten Merkmalsdatensatzes und eines Merkmalsdatensatzes des gespeicherten Bilds und Speichern des erzeugten neuen Bilds in Verbindung mit Informationen, die mit der anderen Partei assoziiert sind; und
wenn von dem Bild nicht bestimmt wird, dass es in dem Speicher (130) gespeichert ist, Extrahieren (505) des Merkmalsdatensatzes aus den empfangenen Sprachdaten, nachdem die Anrufverbindung beendet wurde, Erzeugen (506) des Bilds der anderen Partei auf der Basis des extrahierten Merkmalsdatensatzes und Anzeigen (503) des erzeugten Bilds (201) der anderen Partei auf der Anzeige (140);
wobei das Erzeugen des Bilds der anderen Partei ein Erzeugen eines Mensch-Bilds auf der Basis von Bildinformationen, die in dem Speicher (130) gespeichert sind, ein Erzeugen eines Hintergrund-Bilds auf der Basis von zusätzlichen Informationen und ein Kombinieren des Mensch-Bilds und des Hintergrund-Bilds umfasst; und
wobei die zusätzlichen Informationen mindestens eine von Ortsinformationen, Zeitinformationen und Wetterinformationen, die mit der Anrufverbindung assoziiert sind, umfassen.

2. Verfahren nach Anspruch 1, wobei die Anrufverbindung eine abgehende Anrufverbindung, die durch eine Anforderung eines Anrufs durch einen Benutzer bewirkt wird, oder eine eingehende Anrufverbindung, die durch eine Anforderung eines Anrufs durch die andere Partei bewirkt wird, beinhaltet.

3. Verfahren nach Anspruch 1, weiterhin umfassend:
als Reaktion darauf, dass ein Ereignis, das mit der anderen Partei assoziiert ist, auftritt, Anzeigen des erzeugten Bilds der anderen Partei auf der Anzeige,
wobei das Ereignis mindestens eine von einer abgehenden Anrufverbindung, einer eingehenden Anrufverbindung, einer Anrufprotokollanzeige und einer Telefonbuchanzeige beinhaltet.

4. Verfahren nach Anspruch 1, wobei das Extrahieren (505) des Merkmalsdatensatzes ein Analysieren der Sprachdaten durch Verwenden von mindestens einer von einer Zeitdomäne der Sprachdaten und einer Frequenzdomäne der Sprachdaten beinhaltet.

5. Verfahren nach Anspruch 1, wobei das Extrahieren (505) des Merkmalsdatensatzes ein Extrahieren des Merkmalsdatensatzes aus den Sprachdaten durch Verwenden von mindestens einer von Merkmalsextraktionstechniken beinhaltet, einschließlich LPC, linearer Prädiktionskoeffizient; LPCC, linearer Prädiktions-Cepstrum-Koeffizient; MFCC, Mel-Frequenz-Cepstrum-Koeffizient; PLPC, perzeptiver linearer Prädiktionskoeffizient; und RASTA, RelAtive SpecTrAl.

6. Verfahren nach Anspruch 1, wobei das Extrahieren (505) des Merkmalsdatensatzes ein Extrahieren von mindestens einem bzw. einer von Geschlecht, Alter, einem Sprachvolumen, der Anzahl eines Auftretens einer Stimme und Umgebungsgeräuschen der anderen Partei als den Merkmalsdatensatz und der Anzahl von Anrufteilnehmern aus den Sprachdaten beinhaltet.

7. Verfahren nach Anspruch 1, wobei das Erzeugen (506) des Bilds ein Erzeugen eines Mensch-Bilds (340a) durch Verwenden von mindestens einem von Frisuren, Augentypen, Nasentypen, Mundtypen und Faltentypen auf der Basis des Merkmalsdatensatzes beinhaltet.

8. Verfahren nach Anspruch 1, weiterhin umfassend:
Speichern des Merkmalsdatensatzes mit Informationen, die mit der anderen Partei assoziiert sind.

9. Elektronische Vorrichtung (100), umfassend:
eine Anzeigeeinheit (140);
eine Speichereinheit (130) und
eine Steuereinheit (150), konfiguriert zum:
Empfangen (504) von Sprachdaten von einer anderen Partei eines Sprachanrufs durch eine Anrufverbindung;
Bestimmen, ob ein Bild der anderen Partei in der Speichereinheit (130) gespeichert ist,
wenn von dem Bild bestimmt wird, dass es in der Speichereinheit (130) gespeichert ist, Anzeigen des gespeicherten Bilds auf der Anzeigeeinheit (140), Extrahieren eines Merkmalsdatensatzes aus den empfangenen Sprachdaten, nachdem die Anrufverbindung beendet wurde, Erzeugen eines neuen Bilds der anderen Partei auf der Basis des extrahierten Merkmalsdatensatzes und eines Merkmalsdatensatzes des gespeicherten Bilds und Speichern des erzeugten neuen Bilds in Verbindung mit Informationen, die mit der anderen Partei assoziiert sind, in der Speichereinheit (130), und
wenn von dem Bild nicht bestimmt wird, dass es in der Speichereinheit (130) gespeichert ist, Extrahieren (505) des Merkmalsdatensatzes aus den Sprachdaten, nachdem die Anrufverbindung beendet wurde, Erzeugen (506) des Bilds der anderen Partei und Anzeigen des erzeugten Bilds (201) der anderen Partei auf der Anzeigeeinheit (140);
wobei die Steuereinheit (150) weiterhin dazu konfiguriert ist, das Bild der anderen Partei durch Erzeugen eines Mensch-Bilds auf der Basis von Bildinformationen, die in dem Speicher (130) gespeichert sind, Erzeugen eines Hintergrund-Bilds auf der Basis von zusätzlichen Informationen und Kombinieren des Mensch-Bilds und des Hintergrund-Bilds zu erzeugen; und
wobei die zusätzlichen Informationen mindestens eine von Ortsinformationen, Zeitinformationen und Wetterinformationen, die mit der Anrufverbindung assoziiert sind, umfassen.

10. Elektronische Vorrichtung (100) nach Anspruch 9, wobei die Steuereinheit (150) weiterhin dazu konfiguriert ist, die Sprachdaten durch Verwenden von mindestens einer von einer Zeitdomäne der Sprachdaten und einer Frequenzdomäne der Sprachdaten zu analysieren.

11. Elektronische Vorrichtung (100) nach Anspruch 9, wobei die Steuereinheit (150) weiterhin dazu konfiguriert ist, mindestens eines bzw. eine von Geschlecht, Alter, einem Sprachvolumen, der Anzahl eines Auftretens einer Stimme und Umgebungsgeräuschen der anderen Partei als den Merkmalsdatensatz und die Anzahl von Anrufteilnehmern aus den Sprachdaten zu extrahieren und ein Mensch-Bild (340a) durch Verwenden von mindestens einem von Frisuren, Augentypen, Nasentypen, Mundtypen und Faltentypen auf der Basis des Merkmalsdatensatzes zu erzeugen.

12. Elektronische Vorrichtung (100) nach Anspruch 9, wobei die Speichereinheit (130) weiterhin dazu konfiguriert ist, den Merkmalsdatensatz in Verbindung mit Informationen, die mit der anderen Partei assoziiert sind, zu speichern.

## Revendications

1. Procédé d'affichage d'informations d'image comprenant :
la réception (504) de données vocales d'une autre partie d'un appel vocal via une connexion d'appel ;
la détermination si une image de l'autre partie est stockée dans une mémoire (130) d'un dispositif électronique (100) ;
si l'image est déterminée comme étant stockée dans la mémoire (130), l'affichage de l'image stockée sur un affichage (140) du dispositif électronique (100), l'extraction d'une donnée de caractéristique à partir des données vocales reçues après la fin de la connexion d'appel, la création d'une nouvelle image de l'autre partie sur la base de la donnée de caractéristique extraite et d'une donnée de caractéristique de l'image stockée, et le stockage de la nouvelle image créée en relation avec des informations associées à l'autre partie ; et
si l'image n'est pas déterminée comme étant stockée dans la mémoire (130), l'extraction (505) de la donnée de caractéristique à partir des données vocales reçues après la fin de la connexion d'appel, la création (506) de l'image de l'autre partie, sur la base de la donnée de caractéristique extraite, et l'affichage (503) de l'image créée (201) de l'autre partie sur l'affichage (140) ;
dans lequel la création de l'image de l'autre partie comprend la création d'une image humaine sur la base d'informations d'image stockées dans la mémoire (130), la création d'une image d'arrière-plan sur la base d'informations supplémentaires, et la combinaison de l'image humaine et de l'image d'arrière-plan ; et
dans lequel les informations supplémentaires comprennent au moins un élément parmi des informations de localisation, des informations de temps et des informations météorologiques associées à la connexion d'appel.

2. Procédé selon la revendication 1, dans lequel la connexion d'appel comprend une connexion d'appel sortant provoquée par une demande d'appel d'un utilisateur ou par une connexion d'appel entrant provoquée par la demande d'appel de l'autre partie.

3. Procédé selon la revendication 1, comprenant en outre :
l'affichage, en réponse à la survenue d'un événement associé à l'autre partie, de l'image créée de l'autre partie sur l'affichage,
dans lequel l'événement comprend au moins l'un parmi une connexion d'appel sortant, une connexion d'appel entrant, un affichage du journal d'appels et un affichage du répertoire.

4. Procédé selon la revendication 1, dans lequel l'extraction (505) des données de caractéristiques comprend l'analyse des données vocales en utilisant au moins l'un d'un domaine temporel des données vocales et d'un domaine fréquentiel des données vocales.

5. Procédé selon la revendication 1, dans lequel l'extraction (505) des données de caractéristiques comprend l'extraction des données de caractéristiques à partir des données vocales en utilisant au moins l'une des techniques d'extraction de caractéristiques comprenant le coefficient de prédiction linéaire, LPC ; le coefficient cépstral de prédiction linéaire, LPCC ; le coefficient cépstral Mel-Frequency, MFCC ; le coefficient de prédiction linéaire perceptuelle, PLPC ; et l'analyse SpecTrAl RelAtive, RASTA.

6. Procédé selon la revendication 1, dans lequel l'extraction (505) des données de caractéristiques comprend l'extraction, en tant que données de caractéristiques, d'au moins un parmi le sexe, l'âge, un volume de voix, le nombre de fois qu'une voix se produit et le bruit ambiant de l'autre partie, et le nombre de participants à l'appel, à partir des données vocales.

7. Procédé selon la revendication 1, dans lequel la création (506) de l'image comprend la création d'une image humaine (340a) en utilisant au moins l'un parmi des styles de cheveux, types d'yeux, types de nez, types de bouche et types de rides, sur la base des données de caractéristiques.

8. Procédé selon la revendication 1, comprenant en outre :
le stockage des données de caractéristiques en relation avec des informations associées à l'autre partie.

9. Dispositif électronique (100) comprenant : une unité d'affichage (140) ; une unité de mémoire (130) ; et une unité de commande (150) configurée pour :
recevoir (504) des données vocales d'une autre partie d'un appel vocal via une connexion d'appel ;
déterminer si une image de l'autre partie est stockée dans l'unité de mémoire (130), si l'image est déterminée comme étant stockée dans l'unité de mémoire, (130) afficher l'image stockée sur l'unité d'affichage (140), extraire une donnée de caractéristique à partir des données vocales reçues après la fin de la connexion d'appel, créer une nouvelle image de l'autre partie sur la base des données de caractéristiques extraites et des données de caractéristiques de l'image stockée, et stocker la nouvelle image créée en relation avec des informations associées à l'autre partie dans l'unité de mémoire (130), et si l'image n'est pas déterminée comme étant stockée dans l'unité de mémoire (130), extraire (505) les données de caractéristiques à partir des données vocales après la fin de la connexion d'appel, créer (506) l'image de l'autre partie, et afficher l'image créée (201) de l'autre partie sur l'unité d'affichage (140) ;
dans lequel l'unité de commande (150) est en outre configurée pour créer l'image de l'autre partie en créant une image humaine sur la base d'informations d'image stockées dans la mémoire (130), en créant une image d'arrière-plan sur la base d'informations supplémentaires, et en combinant l'image humaine et l'image d'arrière-plan ; et
dans lequel les informations supplémentaires comprennent au moins un élément parmi des informations de localisation, des informations de temps et des informations météorologiques associées à la connexion d'appel.

10. Dispositif électronique (100) selon la revendication 9, dans lequel l'unité de commande (150) est en outre configurée pour analyser les données vocales en utilisant au moins l'un d'un domaine temporel des données vocales et d'un domaine fréquentiel des données vocales.

11. Dispositif électronique (100) selon la revendication 9, dans lequel l'unité de commande (150) est en outre configurée pour extraire, en tant que données de caractéristiques, au moins l'un parmi le sexe, l'âge, un volume de voix, le nombre de fois où une voix se produit et le bruit ambiant de l'autre partie et le nombre de participants à l'appel, à partir des données vocales, et pour créer une image humaine (340a) en utilisant au moins l'un parmi des styles de cheveux, types d'yeux, types de nez, types de bouche et types de rides, sur la base des données de caractéristiques.

12. Dispositif électronique (100) selon la revendication 9, dans lequel l'unité de mémoire (130) est en outre configurée pour stocker les données de caractéristiques en relation avec des informations associées à l'autre partie.
